# EUROPEAN PATENT APPLICATION

(11) **EP 4 574 305 A1**
(43) Date of publication of application: **25.06.2025**
(21) Application number: 23885713.0
(22) Date of filing: 30.10.2023
(51) Int. Cl.: B22D 11/059, B22D 11/108

(54) **MOLD COPPER PLATE, CASTING MOLD FOR CONTINUOUS CASTING, AND METHOD FOR SLAB CASTING**

(30) Priority: 04.11.2022 JP 2022177135
(71) Applicant: JFE Steel Corporation, Tokyo 100-0011 (JP)
(72) Inventor: FURUMAI Kohei, Tokyo 100-0011 (JP); ARAMAKI Norichika, Tokyo 100-0011 (JP)
(74) Representative: Hoffmann Eitle
(86) International application number: PCT/JP2023/039089
(87) International publication number: WO 2024/095958

(57) **Abstract**

To provide a mold copper plate by which it is possible to form a solidified shell of a slab in an appropriate state and prolong a lifetime of a coating applied to the mold copper plate. The mold copper plate for a continuous casting mold includes a base material layer containing copper or a copper alloy, and a coating layer provided on the base material layer. The coating layer includes at least one of nickel, cobalt, a nickel-based alloy, a cobalt-based alloy, or a stainless steel alloy as one component element, and includes an alloy including at least one of a metal nitride, a metal carbide, or a metal oxide as another component element. According to the present invention, it is possible to form a solidified shell of a slab in an appropriate state and prolong a lifetime of coating applied to a mold copper plate.

## Description

### Technical Field

The present invention relates to a mold copper plate used for a continuous casting mold, a continuous casting mold, and a method for casting a slab.

### Background Art

For example, in manufacturing a slab of medium carbon steel such as hypo-peritectic steel (hereinafter, also referred to as "slab") by using a mold, a mold flux is used to maintain lubricity between the mold and a solidified shell.

The mold flux sprayed on a surface of a molten steel in the mold is melted by the heat of the molten steel, enters between the mold and the solidified shell, and then becomes film-like. When the mold flux is sprayed on the surface of the mold, an inflow amount of the mold flux may vary from one part of the mold to another. When the inflow amount of the mold flux varies, the degree of solidification of the molten steel varies. As a result, a longitudinal crack of the slab is likely to occur at an initial stage of solidification of the molten steel. When the degree of solidification of the molten steel varies, the solidification at a specific portion becomes slow, which may cause breakout.

An occurrence of variation in the degree of solidification of the mold flux has been suppressed. Specifically, a crystallization temperature of the mold flux is increased, a precipitation of cuspidine is promoted when the mold flux is solidified, and the types of precipitated crystals are reduced.

However, in such a method of adjusting a physical property and a composition of precipitated crystals, it is difficult to ensure the lubricity between the mold and the solidified shell, which is one of the purposes of the mold flux. Therefore, the viscosity of the mold flux is reduced.

When the viscosity of the mold flux decreases, there is a concern that so-called entrainment occurs in which the mold flux becomes entrained in the molten steel. For the solidification of the mold flux, it is necessary to consider a complex system including the crystallization temperature, degree of vitrification (degree of crystallization), and type of crystal of the mold flux, which is very complex.

In order to solve such a problem, there has been proposed a method for reducing the variation in the degree of solidification of molten steel by increasing the wettability between the mold flux in a molten state and the mold. Specifically, a TiN coating is applied to a surface of a mold (see Patent Literatures 1 and 2).

### Citation List

### Patent Literature

Patent Literature 1: H9-314288 A
Patent Literature 2: WO. 2003/064077

### Summary of Invention

### Technical Problem

A mold copper plate is used for an inner wall of a mold. TiN used for a coating has a lower thermal conductivity than copper. Thus, the thickness of a solidified shell formed in the mold is small, and therefore, breakout may occur. Although ceramic materials such as TiN have an excellent wear resistance, their thermal and mechanical impact resistance and elongation characteristics are lower than those of metals, and thus, the crack resistance lifetime of the coating may be reduced.

The present invention has been made in view of the above problems, and an object thereof is to provide a mold copper plate, a continuous casting mold, and a method for casting a slab, by which it is possible to form a solidified shell of a slab in an appropriate state and to prolong the lifetime of a coating applied to the mold copper plate. Solution to Problem

In order to solve the above problems, the present invention has the following characteristics.

[1] A mold copper plate of a continuous casting mold, including: a base material layer containing copper or a copper alloy; and a coating layer provided on the base material layer, in which the coating layer includes at least one of nickel, cobalt, a nickel-based alloy, a cobalt-based alloy, or a stainless steel alloy as one component element, and includes an alloy including at least one of a metal nitride, a metal carbide, or a metal oxide as another component element.
[2] A continuous casting mold including a mold copper plate including a base material layer containing copper or a copper alloy and a coating layer provided on the base material layer, the coating layer including at least one of nickel, cobalt, a nickel-based alloy, a cobalt-based alloy, or a stainless steel alloy as one component element, and including an alloy including at least one of a metal nitride, a metal carbide, or a metal oxide as another component element.
[3] The continuous casting mold according to [2], in which the coating layer has a thickness in a lamination direction of 2.0 mm or less and is provided in a region at least 200 mm below a meniscus.
[4] The continuous casting mold according to [2] or [3], in which the mold copper plate includes a recessed groove or a round groove provided between the base material layer and the coating layer, and the recessed groove or the round groove is filled with a different kind of substance having a thermal conductivity different from a thermal conductivity of the mold copper plate.
[5] A method for casting a slab through continuous casting by adding mold flux to molten steel, including:
   casting a slab having a thickness of 80 mm or more and 600 mm or less by using the continuous casting mold according to any one of [2] to [4].

### Advantageous Effects of Invention

According to the present invention, it is possible to form a solidified shell of a slab in an appropriate state and prolong a lifetime of a coating applied to a mold copper plate.

### Brief Description of Drawings

FIG. 1 is a perspective view of a continuous casting mold according to an embodiment.
FIG. 2 is a cross-sectional view of a mold copper plate of FIG. 1.
FIG. 3 is a plan view of a long side of the mold in FIG. 1.
FIG. 4 is a graph showing a variation in thickness of a solidified shell in Examples.
FIG. 5 is a graph showing the number of longitudinal cracks on a surface of a slab in Examples.
FIG. 6 is a graph showing a lifetime number of charges based on a wear resistance evaluation of a coating film in Examples.
FIG. 7 is a graph showing a lifetime number of charges based on a crack resistance evaluation of the coating film in Examples.

### Description of Embodiments

As one embodiment of the present invention, an example in which a mold copper plate is used in a continuous casting mold (hereinafter also referred to as a "mold") will be described.

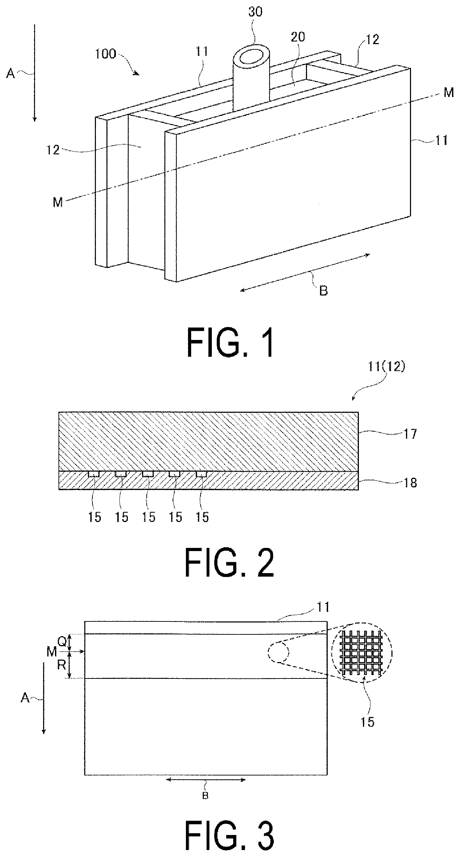

As illustrated in FIG. 1, a mold 100 is formed in a hollow cylindrical shape. The mold 100 includes a pair of mold copper plates 11 disposed facing each other and a pair of mold copper plates 12 sandwiched between the mold copper plates 11 and disposed facing each other.

The pair of mold copper plates 11 and the pair of mold copper plates 12 are each formed in a rectangular plate shape. The pair of mold copper plates 11 are disposed on a front surface and a rear surface in FIG. 1. The pair of mold copper plates 12 are disposed on a right side surface and a left side surface in FIG. 1.

In a top view, inner wall surfaces of the mold 100 are formed in a rectangular shape by the pair of mold copper plates 11 and the pair of mold copper plates 12. The mold 100 has an internal space surrounded by the pair of mold copper plates 11 and the pair of mold copper plates 12.

A tundish (not illustrated) storing a molten steel 20 is disposed above the mold 100. An immersion nozzle 30 extending towards the mold 100 is provided at a bottom portion of the tundish. The immersion nozzle 30 is inserted into the internal space of the mold 100.

The rear surfaces of the mold copper plate 11 and the mold copper plate 12 are formed with a concave portion serving as a cooling water passage (not illustrated). The mold 100 is cooled by passing cooling water through the cooling water passage.

The molten metal surface level of the molten steel 20 in the mold 100 is called a meniscus M. In FIG. 1, the meniscus M of the mold 100 is at a position indicated by a dashed and dotted line. A symbol A in FIG. 1 indicates a casting direction. A symbol B in FIG. 1 indicates a width direction of the mold 100. That is, the mold 100 is disposed such that the casting direction A and the width direction B are orthogonal to each other.

FIG. 2 illustrates a cross section of the mold copper plate 11 (12). As illustrated in FIG. 2, in the mold copper plate 11 (12), a coating layer 18 is formed on a base material layer 17. More specifically, the coating layer 18 is disposed on a surface of the base material layer 17 on an internal space side.

The base material layer 17 contains copper or a copper alloy. An example of a material of the base material layer 17 includes a copper alloy containing chromium, zirconium, and the like.

The coating layer 18 is preferably formed in a region near the meniscus M of the mold 100 illustrated in FIG. 1. More specifically, the coating layer 18 is preferably provided so as to include a region R described below. The coating layer 18 preferably has a thickness of 2. 0 mm or less in a lamination direction.

The coating layer 18 includes at least one of nickel, cobalt, a nickel-based alloy, a cobalt-based alloy, or a stainless steel alloy as one component element, and includes an alloy including at least one of a metal nitride, a metal carbide, or a metal oxide as another component element.

The one component element is preferably a metal having a characteristic of a high heat resistance and a high corrosion resistance.

Examples of the nickel-based alloy include Hastelloy and Inconel.

When the alloy contained in the coating layer 18 contains the one component, it is possible to bring the thermal conductivity of the coating layer 18 close to the thermal conductivity of copper.

Examples of the metal nitride of the other element component include TiN and TiSiN.

Examples of the metal carbide of the other element component include TiC and TiSiC.

Examples of the metal carbide of the other element component include TiO and TiSiO.

When the alloy contained in the coating layer 18 contains the other element component, it is possible to improve the wettability between the mold flux and the surface of the mold copper plate 11 (12). Therefore, in the width direction B and the casting direction A, it is possible to reduce a variation in the inflow amount of the mold flux flowing into the mold 100, that is, the mold flux can be made to uniformly flow into the mold 100. When the coating layer 18 has such a composition, it is possible to gradually cool the molten steel 20 by lowering the thermal conductivity at an initial stage of cooling of the molten steel than at a final stage. As a result, the occurrence of longitudinal cracks in the slab can be improved.

The coating layer 18 can be provided on the base material layer 17 by a physical vapor deposition (PVD) method, for example, and the method is not particularly limited.

Note that the mold flux is not particularly limited, and a well-known mold flux can be used. Examples of the mold flux include those containing SiO₂, Al₂O₃, CaO, MgO, F, Na₂O, and the like.

A wettability between the mold flux in a molten state and the coating layer 18 is preferably lower than a wettability between the mold flux and Ni or NiCo.

Between the base material layer 17 and the coating layer 18, recessed grooves 15 are provided. In the present embodiment, the recessed grooves 15 are formed to be recessed from the surface of the base material layer 17 facing the coating layer 18. The recessed grooves 15 may be formed to be recessed from the surface of the coating layer 18 facing the base material layer 17. Note that in the present embodiment, an aspect in which the recessed grooves 15 is formed will be described. However, the recessed grooves 15 are appropriately provided according to the embodiment, and do not necessarily have to be formed in the mold copper plate 11.

FIG. 3 illustrates a surface of the mold copper plate 11 on an inner space side. In FIG. 3, an internal structure of a portion surrounded by a dotted circle is schematically illustrated. As illustrated in FIG. 3, it is preferable that the mold copper plate 11 include the recessed grooves 15 provided in a region being at least 200 mm below the meniscus M.

In the present embodiment, the recessed grooves 15 are provided in a region R 200 mm below the meniscus M and in a region Q 30 mm above the meniscus M in consideration of a variation in molten metal surface level.

In the present embodiment, the recessed grooves 15 include a plurality of longitudinal grooves extending along the casting direction A and being arranged along the width direction B so as to be parallel to each other. The recessed grooves 15 include a plurality of lateral grooves extending along the width direction B and being arranged along the casting direction A so as to be parallel to each other. Therefore, the recessed grooves 15 are formed in a lattice shape by the plurality of longitudinal grooves and the plurality of lateral grooves. Note that round grooves may be used instead of the recessed grooves 15.

The recessed grooves 15 are filled with a different kind of substance having a thermal conductivity different from a thermal conductivity of the mold copper plate. Examples of the different kind of substance include metal having lower thermal conductivity than copper, for example, Ni (thermal conductivity: about 90 W/(m·K)) and a Ni alloy (thermal conductivity: about 40 to 90 W/(m·K)). Examples of the different kind of substance include Cu, Co, NiCo, a nickel-based alloy (Hastelloy, Inconel), and a stainless steel alloy. The different kind of substance is not limited to a metal and may be a non-metal as long as such a substance has a thermal conductivity different from a thermal conductivity of the mold copper plate.

When the recessed grooves 15 are filled with a different kind of substance, it is possible to regularly and periodically increase and decrease the thermal resistance of the mold 100 in the casting direction A and width direction B of the mold 100 in the vicinity of the meniscus M. It is also possible to reduce the variation in the inflow amount of the mold flux flowing into the mold 100 while improving a lifetime of the mold 100. Thus, by regularly and periodically increasing and decreasing the thermal resistance of the mold 100, uneven solidification can be reduced and surface cracking of the slab can be suppressed.

When the different kind of substance is provided, a heat flux from the solidified shell to the mold 100 in the vicinity of the meniscus M, that is, at an initial stage of solidification of the molten steel, increases and decreases regularly and periodically. By regularly and periodically increasing and decreasing the heat flux, the thermal stress and stress due to δ/γ transformation are reduced, and the degree of deformation of the solidified shell caused by such stresses can be reduced.

When the degree of deformation of the solidified shell is reduced, the variation in the heat flux distribution is reduced and the generated stress is dispersed, reducing the amount of individual strain. As a result, cracking on the surface of the solidified shell can be suppressed.

A process of casting a slab using the mold 100 described above will be described. First, the molten steel 20 is injected into the mold 100 through the immersion nozzle 30, and a mold flux is added thereto. The molten steel 20 cooled in the mold 100 is solidified by removing heat from a portion in contact with an inner wall surface of the mold 100, and a so-called solidified shell is formed.

The solidified shell is cooled by a water spray or an air-mist spray provided on a downstream side of the mold, and is continuously drawn out in the casting direction A, which is a downward direction in a vertical direction, together with the unsolidified layer inside. The solidified shell, which is cooled by the water spray or the air-mist spray, is solidified up to a central portion. The solidified shell is then cut by a gas cutter or the like to produce a cast slab having a predetermined length.

A temperature of the molten steel 20 is highest near the meniscus M. Although, depending on the grade of steel, it is desirable that the heat removal of the solidified shell is performed from the inner wall surface of the mold 100 in the width direction B orthogonal to the casting direction A particularly at the position of the meniscus M. In thus removing the heat from the solidified shell, it is possible to reduce a variation in the thickness of the solidified shell.

The slab thus produced may have a thickness of 80 mm or more and 600 mm or less, preferably 80 mm or more and 300 mm or less, and more preferably 80 mm or more and 250 mm or less.

When the thickness of the slab is equal to or greater than 80 mm, it is possible to reduce non-uniform solidification of the molten steel even during high-speed casting. When the thickness of the slab is equal to or less than 600 mm, it is possible to prevent the solidification of the molten steel in the casting mold from becoming uneven even at a low casting speed.

Here, when the alloy contained in the coating layer includes only a metal nitride and a metal carbide as in the above-mentioned prior art, the thermal and mechanical impact resistance and elongation characteristic are small. Therefore, a crack or the like is likely to occur in the coating layer, and the lifetime of the coating layer is reduced.

On the other hand, the mold copper plate 11 (12) according to the present embodiment includes an alloy containing one element component and another element component in the coating layer 18. Therefore, the mold copper plate 11 (12) has a good wettability with the mold flux. As a result, a variation in solidification of the mold flux can be reduced, and a solidified shell having a small variation in thickness can be produced. When the coating layer 18 contains the one element component, the mold copper plate 11 (12) has a good thermal and mechanical impact resistance and elongation characteristic. Therefore, the lifetime of the coating layer 18 can be improved.

In particular, when the coating layer 18 is provided so as to include the region R 200 mm below the meniscus M, it is possible to slowly cool the solidified shell only at the initial stage of solidification of the molten steel. As a result, the solidified shell can be produced in a more appropriate state.

### Examples

Examples of the present invention will be described below in comparison with Conventional Examples and Comparative Examples.

### (Test Example 1: Coating Comparative Test)

Molten steel subjected to an oxygen blowing treatment and an RH vacuum degassing treatment in a converter was used. Three hundred tons of molten steel was introduced into a ladle and a slab was produced by using a continuous casting mold.

A mold copper plate of the mold was coated in a manner shown in Table 1 to prepare Conventional Example 1, Invention Examples 1 to 20, and Comparative Examples 1 to 4. The coatings of Conventional Example 1, Invention Examples 1 to 20, and Comparative Examples 1 to 4 were all applied to a region 200 mm below the meniscus M. In Conventional Example 1, Ni plating was applied as a coating. In a column of "different kind of substance" in Table 1, a notation of "NO" means that no recessed grooves are formed in the mold copper plate. A notation of "YES" means that Ni was used as the different kind of substance.

**[Table 1]**

| | Mold surface coating | Different kind of substance | Variation in in-mold shell thickness in width direction (1σ) [mm] | Number of slab surface longitudinal cracks [number ·m⁻²] | Mold lifetime charge number for wear resistance evaluation [Number of charges] | Mold lifetime charge number for crack resistance evaluation [Number of charges] | Tensile strength at 300°C [MPa] | Total evaluation mold lifetime charge number [Number of charges] |
|---|---|---|---|---|---|---|---|---|
| Conventional Example 1 | Ni plating | NO | 0.80 | 1.21 | 1200 | 700 | 313 | 700 |
| Invention Example 1 | TiN-Ni | NO | 0.20 | 0.14 | 1200 | 950 | 430 | 950 |
| Invention Example 2 | TiC-Ni | NO | 0.20 | 0.12 | 1250 | 925 | 435 | 925 |
| Invention Example 3 | TiO-Ni | NO | 0.30 | 0.13 | 1220 | 940 | 460 | 940 |
| Invention Example 4 | TiN-Co | NO | 0.30 | 0.10 | 1180 | 915 | 452 | 915 |
| Invention Example 5 | TiC-Co | NO | 0.10 | 0.13 | 1210 | 920 | 412 | 920 |
| Invention Example 6 | TiO-Co | NO | 0.20 | 0.13 | 1220 | 925 | 420 | 925 |
| Invention Example 7 | TiN-Hastelloy | NO | 0.10 | 0.15 | 1190 | 1350 | 608 | 1190 |
| Invention Example 8 | TiC-Hastelloy | NO | 0.10 | 0.11 | 1200 | 1370 | 607 | 1200 |
| Invention Example 9 | TiO-Hastelloy | NO | 0.10 | 0.11 | 1220 | 1320 | 605 | 1220 |
| Invention Example 10 | TiN-Inconel | NO | 0.08 | 0.13 | 1210 | 1310 | 608 | 1210 |
| Invention Example 11 | TiC-Inconel | NO | 0.08 | 0.14 | 1180 | 1360 | 605 | 1180 |
| Invention Example 12 | TiO-Inconel | NO | 0.08 | 0.15 | 1190 | 1350 | 606 | 1190 |
| Invention Example 13 | TiN-stainless steel | NO | 0.09 | 0.16 | 1200 | 1355 | 607 | 1200 |
| Invention Example 14 | TiC-stainless steel | NO | 0.09 | 0.12 | 1185 | 1345 | 605 | 1185 |
| Invention Example 15 | TiO-stainless steel | NO | 0.09 | 0.13 | 1188 | 1340 | 603 | 1188 |
| Invention Example 16 | TiN-Ni | YES | 0.05 | 0.14 | 1170 | 920 | 450 | 920 |
| Invention Example 17 | TiN-Co | YES | 0.06 | 0.08 | 1180 | 925 | 452 | 925 |
| Invention Example 18 | TiN-Hastelloy | YES | 0.04 | 0.07 | 1170 | 1350 | 610 | 1170 |
| Invention Example 19 | TiN-Inconel | YES | 0.05 | 0.06 | 1190 | 1360 | 603 | 1190 |
| Invention Example 20 | TiN-stainless steel | YES | 0.06 | 0.05 | 1230 | 1320 | 608 | 1230 |
| Comparative Example 1 | NO | NO | 1.10 | 1.80 | 1210 | 520 | 150 | 520 |
| Comparative Example 2 | TiN | NO | 0.40 | 0.30 | 700 | 800 | 420 | 700 |
| Comparative Example 3 | TiC | NO | 0.30 | 0.40 | 720 | 798 | 430 | 720 |
| Comparative Example 4 | TiO | NO | 0.60 | 0.35 | 680 | 795 | 450 | 680 |

For each of Conventional Example 1, Invention Examples 1 to 20, and Comparative Examples 1 to 4, the variation in the thickness of the solidified shell in the width direction, the number of longitudinal cracks on the surface of the slab, and the lifetime of the coating were predicted. The variation in the thickness of the solidified shell in the width direction, the number of longitudinal cracks on the surface of the slab, and the lifetime of the coating were predicted based on a temperature of a thermocouple installed in the mold copper plate of the mold.

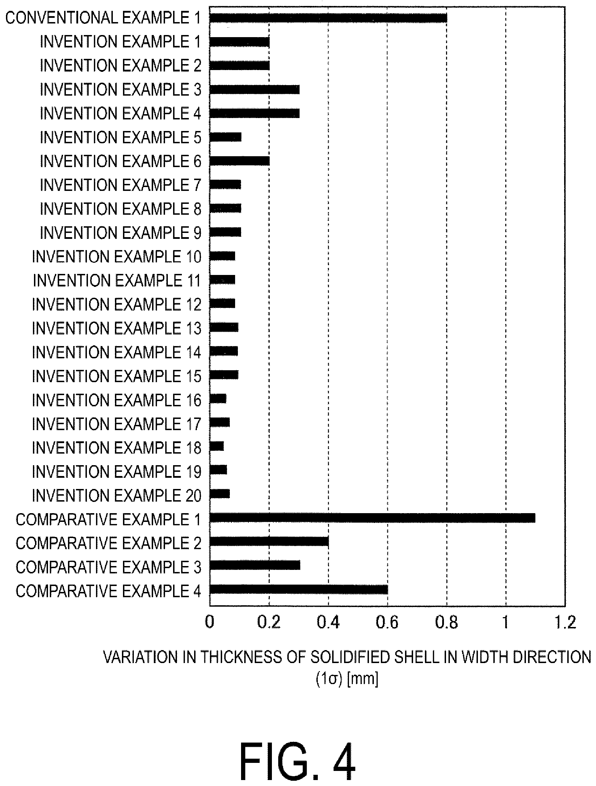

FIG. 4 shows a variation in thickness of the solidified shell in the width direction in each of Conventional Example 1, Invention Examples 1 to 20, and Comparative Examples 1 to 4. As shown in FIG. 4, it was found that the variation in thickness of the solidified shell in the width direction in Invention Examples 1 to 20 was smaller than that in Conventional Example 1 and Comparative Examples 1 to 4.

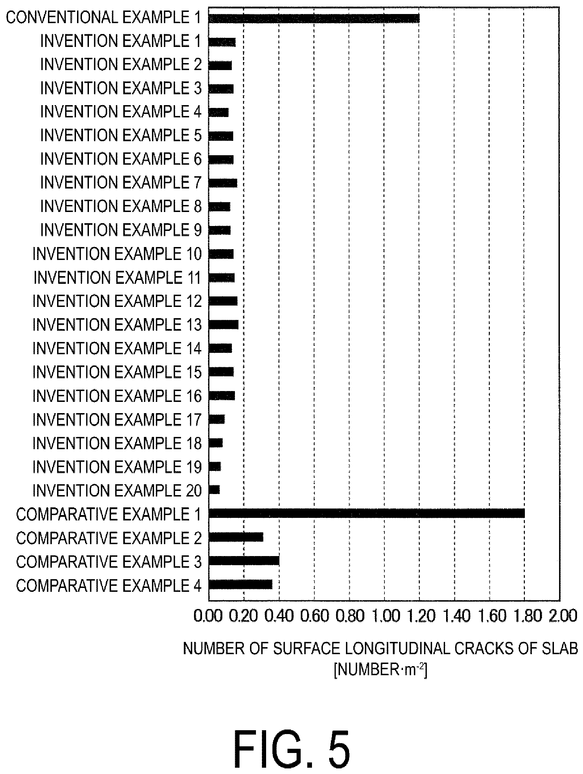

FIG. 5 shows the number of longitudinal cracks on the surface of each of the slabs in Conventional Example 1, Invention Examples 1 to 20, and Comparative Examples 1 to 4. As shown in FIG. 5, it was found that the number of longitudinal cracks on the surface of the slabs in Invention Examples 1 to 20 was smaller than that in Conventional Example 1 and Comparative Examples 1 to 4.

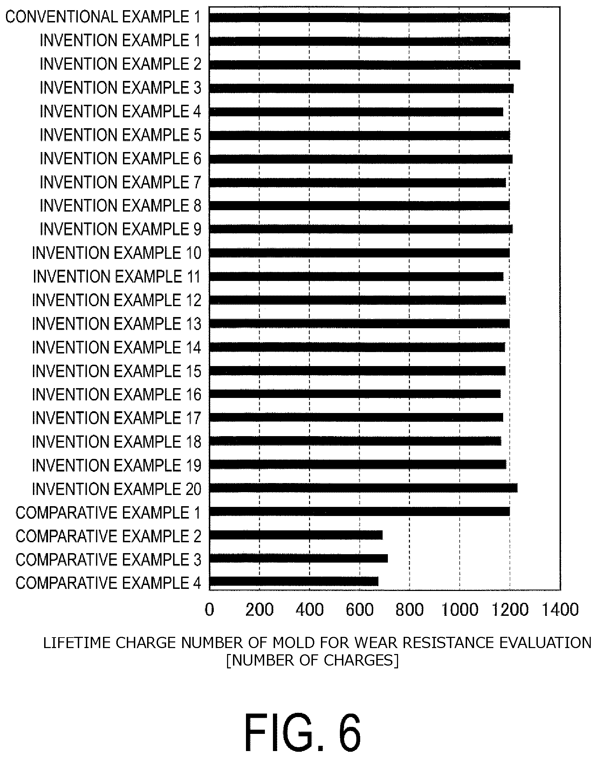

FIG. 6 shows a lifetime charge number of each coating in Conventional Example 1, Invention Examples 1 to 20, and Comparative Examples 1 to 4. In FIG. 6, the wear resistance of the coating is evaluated. As shown in FIG. 6, it was found that the wear resistance of the coatings in Invention Examples 1 to 20 was longer than that in Comparative Examples 2 to 4. It was found that the wear resistance of the coating in Invention Examples 2, 3, 5, 6, 9, 10, and 20 was longer than that in Conventional Example 1. It was found that the wear resistance of the coating in Invention Examples 2, 3, 6, 9, and 20 was longer than that in Comparative Example 1.

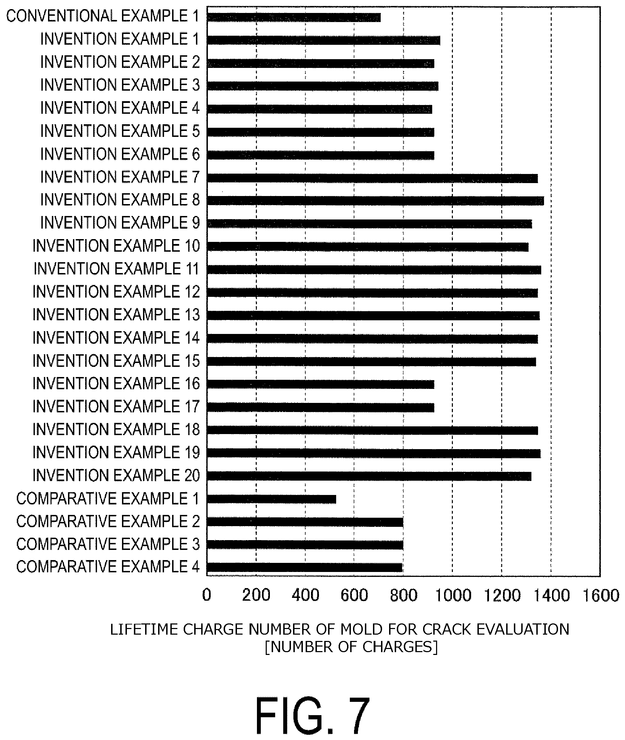

FIG. 7 shows a lifetime charge number of each coating in Conventional Example 1, Invention Examples 1 to 20, and Comparative Examples 1 to 4. In FIG. 7, the crack resistance of the coating is evaluated. The crack resistance was evaluated by measuring a tensile strength at 300°C by the method described in JIS G 0567: 2020.

Note that the surface temperature of the mold during continuous casting of steel reaches about 300°C. In order to evaluate the crack resistance in such a high-temperature environment, a tensile strength test was performed at 300°C. Table 1 shows the tensile strengths of the metals and alloys of the coating layers at 300°C.

As shown in FIG. 7 and Table 1, it was found that the tensile strength of Invention Examples 1 to 20 was higher than that of Conventional Example 1 and Comparative Examples 1 to 4, that is, the crack resistance of the coating was high. In particular, it was found that the crack resistance of Invention Examples 7 to 15 and Invention Examples 18 to 20 in which one component is Hastelloy, Inconel, and stainless steel consisting of alloy components is superior to that of the other Invention Examples.

The wear resistance evaluation in FIG. 6 and the crack resistance evaluation in FIG. 7 were combined to evaluate the lifetime of the coating. The results are also shown in the column of "total evaluation mold lifetime ch number" in Table 1. As shown in the column, it was found that Invention Examples 7 to 15 and Invention Examples 18 to 20 in which the one component is Hastelloy, Inconel, and stainless steel consisting of alloy components are superior to the other Invention Examples.

As described above, in Invention Examples 1 to 20, it is possible to reduce the variation in the thickness of the solidified shell in the width direction of the mold more than in Conventional Example 1 and Comparative Examples 1 to 4. In Invention Examples 1 to 20, the number of surface cracks in the slab can be significantly reduced as compared with Conventional Example 1 and Comparative Examples 1 to 4. In Invention Examples 1 to 20, the lifetime of the coating can be extended longer than that of Conventional Example 1 and Comparative Examples 1 to 4.

### (Test Example 2: Coating Range and Thickness Comparison Test)

A mold copper plate of a mold was subjected to coating as indicated in Table 2 to prepare Invention Examples 21 to 28 and Comparative Examples 5 to 13.

Specifically, Invention Examples 21 to 28 were prepared by changing the alloys of the coating layer, with Ni as one component element and TiN as the other, by changing the area where the coating layer is provided (distance below the meniscus M), and/or by changing the thickness of the coating layer.

Specifically, Comparative Examples 5 to 12 were prepared by changing the coating layer to TiN, by changing the area where the coating layer is provided (distance below the meniscus M), and/or by changing the thickness of the coating layer. In Comparative Example 13, the coating layer had a two-layer structure of Ti + TiN.

**[Table 2]**

| | Coating | Coating range | | Coating thickness (mm) | Evaluation | | |
|---|---|---|---|---|---|---|---|
| | | Distance above meniscus (mm) | Distance below meniscus (mm) | | Variation in in-mold shell thickness in width direction 1σ (mm) | Number of longitudinal cracks on slab surface (number ·m⁻²) | Coating lifetime charge number (Number of charges ) |
| Invention Example 21 | TiN-Ni | 0 | 100 | 2.0 | 0.10 | 0.13 | 1230.0 |
| Invention Example 22 | TiN-Ni | 0 | 200 | 2.0 | 0.10 | 0.12 | 1227.5 |
| Invention Example 23 | TiN-Ni | 0 | 250 | 2.0 | 0.12 | 0.11 | 1180.0 |
| Invention Example 24 | TiN-Ni | 0 | 300 | 2.0 | 0.11 | 0.14 | 1181.5 |
| Invention Example 25 | TiN-Ni | 0 | 200 | 1.0 | 0.09 | 0.15 | 1335.0 |
| Invention Example 26 | TiN-Ni | 0 | 200 | 2.0 | 0.08 | 0.13 | 1190.5 |
| Invention Example 27 | TiN-Ni | 0 | 200 | 2.5 | 0.10 | 0.12 | 1185.5 |
| Invention Example 28 | TiN-Ni | 0 | 200 | 3.0 | 0.10 | 0.13 | 1183.0 |
| Comparative Example 5 | TiN | 0 | 100 | 2.0 | 0.41 | 0.21 | 420.0 |
| Comparative Example 6 | TiN | 0 | 200 | 2.0 | 0.31 | 0.25 | 410.0 |
| Comparative Example 7 | TiN | 0 | 250 | 2.0 | 0.35 | 0.31 | 415.0 |
| Comparative Example 8 | TiN | 0 | 300 | 2.0 | 0.32 | 0.28 | 411.0 |
| Comparative Example 9 | TiN | 0 | 200 | 1.0 | 0.36 | 0.33 | 400.0 |
| Comparative Example 10 | TiN | 0 | 200 | 2.0 | 0.33 | 0.32 | 431.0 |
| Comparative Example 11 | TiN | 0 | 200 | 2.5 | 0.31 | 0.41 | 406.0 |
| Comparative Example 12 | TiN | 0 | 200 | 3.0 | 0.30 | 0.34 | 408.0 |
| Comparative Example 13 | Ti + TiN 2layers | 0 | 200 | 2.5 | 0.15 | 0.17 | 201.0 |

As shown in Table 2, Invention Examples 21 to 28 provided better results than Comparative Examples 5 to 13 in all of the evaluations of the variation in thickness of the solidified shell, the number of cracks in the slab, and the lifetime of the coating.

### Reference Signs List

100 Mold
11, 12 Mold copper plate
15 Recessed grooves
17 Base material layer
18 Coating layer
20 Molten steel
M Meniscus
Q, R Region

## Claims

1. A mold copper plate of a continuous casting mold, comprising:
a base material layer containing copper or a copper alloy; and a coating layer provided on the base material layer, wherein
the coating layer includes at least one of nickel, cobalt, a nickel-based alloy, a cobalt-based alloy, or a stainless steel alloy as one component element, and includes an alloy including at least one of a metal nitride, a metal carbide, or a metal oxide as another component element.

2. A continuous casting mold, comprising:
a mold copper plate including a base material layer containing copper or a copper alloy and a coating layer being provided on the base material layer, the coating layer including at least one of nickel, cobalt, a nickel-based alloy, a cobalt-based alloy, or a stainless steel alloy as one component element, and including an alloy including at least one of a metal nitride, a metal carbide, or a metal oxide as another component element.

3. The continuous casting mold according to claim 2, wherein the coating layer has a thickness in a lamination direction of 2.0 mm or less and is provided in a region being at least 200 mm below a meniscus.

4. The continuous casting mold according to claim 2 or 3, wherein
the mold copper plate includes a recessed groove or a round groove provided between the base material layer and the coating layer, and
the recessed groove or the round groove is filled with a different kind of substance having a thermal conductivity different from a thermal conductivity of the mold copper plate.

5. A method for casting a slab through continuous casting by adding mold flux to molten steel, comprising:
casting a slab having a thickness of 80 mm or more and 600 mm or less by using the continuous casting mold according to any one of claims 2 to 4.
